# EUROPEAN PATENT SPECIFICATION

(11) **EP 0 600 752 B1**
(45) Date of publication and mention of the grant of the patent: **27.03.1996**
(21) Application number: 93309732.1
(22) Date of filing: 03.12.1993
(51) Int. Cl.: B29C 49/46, C08J 7/12

(54) **Process for the production of permeation resistant containers**
Verfahren zur Herstellung von permationsbeständigen Behälten
Procédé pour la production de récipients résistants à la perméation

(30) Priority: 03.12.1992 US 985665; 13.07.1993 US 91485
(43) Date of publication of application: 08.06.1994
(73) Proprietor: AIR PRODUCTS AND CHEMICALS, INC., Allentown, PA 18195-1501 (US)
(72) Inventor: HOBBS, John Peter, Lansdale, PA 19446 (US); MEIXNER, Donald Laurence, Allentown PA 18103 (US); GARG, Diwakar, Emmaus PA 18049 (US)
(74) Representative: Burford, Anthony Frederick

(56) References cited:
- EP-A- 0 039 929
- EP-A- 0 063 378
- EP-A- 0 339 413
- EP-A- 0 500 166
- US-A- 5 244 615

## Description

### FIELD OF THE INVENTION

This invention pertains to a process for the fluorination of polymeric materials, e.g. polyethylene, to produce containers resistant to permeation by hydrocarbons, polar liquids and mixtures of hydrocarbons and polar liquids.

### BACKGROUND OF THE INVENTION

Fluorination of polyethylene and other polymeric materials to improve their resistance to solvents and to vapor permeation has long been practiced. Early work was reported by Joffre in US-A-2,811,468 and Dixon et al. in US-A-3,862,284. US-A-2,811,468 showed the early room temperature fluorination of polyethylene materials to improve the barrier properties thus enhancing the material as a wrapping material for foodstuffs and perishable materials and for the generation of containers via a blow molding operation utilizing a reactive fluorine containing gas for conforming the shape of the molten polyethylene parison to the mold. Joffre carried out fluorination of polyethylene film and of container walls in chambers by contacting the polyethylene surface with a fluorine containing gas at room temperature for a period of 20 to 150 minutes to achieve fluorine concentrations of 0.03 to 3.5 percent by weight of fluorine based on the weight of the polyethylene.

US-A-3,862,284 disclosed fluorination of a variety of polymeric materials in blow molding operations to enhance their barrier properties. A treatment gas containing from 0.1 to 10% by volume of fluorine in an inert gas was injected into the parison and inflated or expanded into shape utilizing the reactive gas. Due to the higher temperature, a blowing time of approximately 5 seconds was utilized at which time the parison was cooled and the reactive gas and container recovered.

Commercially fuel tanks having enhanced resistance to hydrocarbon permeation have been marketed under the Airopak trademark wherein the fuel tanks were produced utilizing blow molding techniques. In these processes the parison is initially conformed to the desired shape by inflating or expanding with an inert gas, followed by evacuation of the parison and subsequent injection of the parison with a reactive gas containing from 0.1 to 10% fluorine. The reactive gas is removed from the parison, recovered and the container ejected from the mold.

There have been substantial modifications to the early processes for the production of containers having enhanced barrier properties via blow molding. Some of these processes are described in the following patents, they are:

US-A-4,142,032 discloses an apparent improvement in the Dixon et al., process utilizing a reactive gas containing both fluorine and a reactive bromine source at temperatures below the softening point of the polymer and pressures one atmosphere (0.1 MPa) or less. Basically, the US-A-4,142,032 process is similar to that of Joffre in that the fluorination is effected at low temperature, thus requiring long reaction times.

US-A-4,404,256; US-A-4,264,750; and US-A-4,593,050 disclose low temperature fluorination of polyolefins, e.g. polyethylene and polypropylene, to form low energy surfaces utilizing wave energy in association with the fluorination process. US-A-4,404,256 and US-A-4,264,750 disclose contacting the polymer surface with ions or radicals comprising fluorine or fluorinated carbon as a cold plasma. US-A-4,593,050 discloses fluorination of polymer surfaces utilizing a fluorinating gas and enhancing the fluorination by exposing the surface to ultraviolet radiation to assist in the fluorination process.

US-A-4,701,290 discloses the production of high density polyethylene fuel tanks having increased barrier resistance to hydrocarbon vapor permeation via off-line-fluorination. The key to enhancing barrier permeation resistance lies in the precise control of fluorination of the polyethylene fuel tank and this is achieved by passing the treatment gas through a container filled with aluminum oxide. By measuring the quantity of oxygen generated from the Al₂O₃, one controls the concentration of fluorine contained in the treatment gas and thereby controls the level of fluorine acting upon the surface of the container within a predefined reaction time.

Improvements in blow molding processes have also been made since the discovery of the Dixon, et al. higher temperature blow molding process and these are reported in US-A-4,830,810; US-A-4,617,077 and US-A-4,869,859. US-A-4,830,810 discloses a blow molding process for producing containers comprising inserting the preform or parison into the mold, injecting inert gas into the parison at a first level of pressure to expand and conform it to the shape of the mold, raising the pressure to a level above the first level by injecting a fluorine containing reactant gas into the parison after pressure tightness has been determined. The reactant gas typically comprises a mixture of fluorine and nitrogen with the fluorine concentration being about 1% by volume; the injection pressures are from 4 bar (0.4 MPa) to 10 bar (1 MPa) and reaction times of about 30 seconds. The process eliminates some of the hazards associated with blow molding using a reactive gas to conform the parison to the mold since pressure tightness at the time of injection of the reaction gas may not have been established. The US-A-4,617,077 modifies the US-A-4,830,810 process in that inflation of the parison in the mold with an inert gas is conducted at high pressure followed by treatment of the interior of the parison with a fluorine containing gas at substantially lower pressure than that used for initially expanding the parison or preform. After reaction, the reaction gas is replaced with a flushing and cooling gas at a pressure substantially higher than the pressure of the reaction gas and even higher than the initial injection gas used to preform the parison.

US-A-4,869,859 discloses a blow molding process for the preparation of high density polyolefin fuel tanks. The patentees indicate that severe wrinkling of the thermoplastic occurs at temperatures close to or above the melting point. Fluorination is carried out at temperatures from 50 to 130°C, preferably 80 to 120°C, and below the molding temperature, in an effort to achieve uniform temperature distribution and fluorination of the interior surface of the material.

### SUMMARY OF THE INVENTION

This invention relates to an improved in-line multi-step fluorination process for the blow molding of thermoplastic containers such as fuel containers and bottles which have enhanced barrier properties. The fuel tank containers have enhanced barrier properties with respect to vapor permeation by hydrocarbons, polar liquids, and hydrocarbon fuels containing polar liquids such as alcohols, ethers, amines, carboxylic acids, and ketones. In the basic process for the production of blow molded thermoplastic articles via in-line fluorination, a parison of thermoplastic material is formed, expanded within a closed mold by means of a gas for conforming the parison to the shape of the mold, fluorinated under conditions sufficient to effect surface fluorination of the interior of said parison and then the parison evacuated, purged, and recovered from the mold. According to the present invention, the fluorination is conducted by pressurizing the parison while at a temperature above its self-supporting temperature with a reactive fluorine containing gas containing at most 1% fluorine by volume for a time sufficient to effect initial fluorination of the interior surface of the parison and thereby form a pre-fluorinated parison, and subsequently pressurizing said pre-fluorinated parison by contacting the interior surface with a reactive fluorine containing gas having a higher fluorine concentration than that employed in said initial fluorination to effect secondary fluorination.

One ("first") embodiment of the present invention resides in the multi-stage fluorination of the parison comprising the steps:
effecting a fluorination of the surface of the parison by contacting the parison with a reactive fluorine containing gas containing from 0.1 to 1% fluorine by volume while the thermoplastic is at a temperature above its self-supporting temperature for a time sufficient to effect fluorination of the surface of the parison; and then,
contacting the initial fluorinated surface of the parison while at an elevated temperature with a reactive fluorine containing gas having a fluorine concentration of at least twice that used in the initial fluorination but not less than 1%.

Another ("second") embodiment of the present invention resides in (1) forming a parison of thermoplastic material and expanding it within a closed mold by means of an inert gas for conforming the parison to the shape of the mold; (2) establishing and maintaining an oxygen contaminant level generally below 50 ppm; (3) fluorinating the parison initially with a reactive gas containing from 0.05 to 0.5% fluorine by volume while the thermoplastic is at a temperature above its self-supporting temperature for a time sufficient to effect fluorination of the surface of the parison; (4) further fluorinating the pre-fluorinated parison while at an elevated temperature with a reactive gas containing fluorine in a concentration greater than that used in the initial fluorination but less than 2.0%, and (5) evacuating the parison, and purging and recovering it from the mold.

A further ("third") embodiment of the present invention differs from the second embodiment in that the thermoplastic material is selected from non-oxygen containing polymers, especially polyethylene and polypropylene, and the oxygen concentration is maintained such that the oxygen-to-carbon ratio (O/C) in the fluorinated layer of the polymer is maintained at less than 0.08.

There are several advantages associated with the in-line multi-step fluorination processes of the present invention to produce containers having improved barrier properties, and these include one or more of:
the ability to form permeation resistant containers having enhanced barrier properties, particularly with respect to hydrocarbons, polar liquids and hydrocarbons containing polar liquids such as alcohols, ethers, amines, carboxylic acids, and ketones;
the ability to produce permeation resistant containers via an in-line blow molding process while achieving fluorination at commercial production rates;
the ability to produce high density polyethylene fuel containers particularly suited for the automotive industry, such containers having reduced permeation associated with hydrocarbon fuels blended with lower (ie C₁ - C₆) alcohols such as methanol and ethanol; ethers such as methyl tertiary butyl ether; and ketones; and,
the ability to produce thin-walled containers utilizing reduced levels of fluorine in the treatment of reactive gas, thereby reducing the total cost of fluorinating containers.

### DETAILED DESCRIPTION OF THE INVENTION

Automotive standards regarding vapor permeation rates associated with hydrocarbon fuels and particularly hydrocarbon fuels containing minor portions of lower alkanols have been established for some times. Fuel tanks constructed of fluorinated high density polyethylene and produced via in-line fluorination processes meet current environmental emission requirements from the automobile manufacturers. However, such fuel containers do not meet the proposed environmental emission requirements, particularly when those hydrocarbon fuels are blended with polar liquids such as lower alkanols, e.g., methanol and ethanol; ethers such as methyl tertiary butyl ether; ketones; amines and other fuel additives. The California Air Resources Board (CARB) has proposed regulations suggesting that a final permeation rate of less than 0.2 g/day would be desirable for future fuel tanks.

Blow molding of thermoplastic materials to produce containers of various sizes, wall thicknesses and shapes is well known. Thermoplastic material such as polymers and copolymers of polystyrene, polyacrylonitrile, polyvinylchloride and particularly polyolefins such as low density and high density polyethylene and polypropylene often are used in producing containers and they can be treated via in-line fluorination to enhance their barrier properties in accordance with this process. The process is particularly adapted for the fluorination of thick-walled containers, e.g., 3 millimeters (mm) and greater, typically 3 to 6 mm high density polyethylene for the fabrication of fuel tanks for the automotive industry and thin-walled, e.g., 2 mm and less wall thickness, bottle-type containers.

In a typical blow molding process for producing hollow articles or containers, a thermoplastic is heated to a temperature above its softening point, formed into a parison and injected into a mold. The parison is inflated or expanded in its softened or molten state via sufficient pressurization with a gas to conform the parison to the contour of the mold. In many processes, fluorine-containing gases initially are used to inflate and conform the parison to the contour of the mold. However, releases may occur during the initial pressurization of the parisons, particularly thick-walled containers such as fuel tanks, and cause a release of fluorine and contaminate the workplace. In recent years, the parison initially is conformed to the mold via pressurization with a substantially inert gas, e.g. nitrogen, helium, or argon, to ensure that a seal is formed, then fluorinated in an effort to reduce environmental contamination and occupational hazards.

Although fuel tanks constructed via the above described in-line fluorination process have provided acceptable barrier to permeation by hydrocarbon solvents and meet current environmental emission requirements, the in-line processes have not produced containers having acceptable barrier resistance to permeation by hydrocarbon solvents containing polar liquids to meet future environmental emission requirements. Thin-walled products such as bottles also are noted to have high permeation rates and greater barrier resistance is required.

In the conceptual development of the first embodiment of the invention it was postulated that surface damage in the form of "molecular pinholes", which render the container permeable to alcohols, ethers, and other organic fuel additives, were being generated in prior art processes by the high temperature reaction of fluorine with the polymer at its surface. The key to reducing permeation was visualized as controlling the level of CFₓ sites at the surface of the polymer, these sites indicating a high degree of reaction and high localized temperatures during the initial contact with the reactant gases. The high localized temperature lead to the formation of molecular pinholes at the surface of the container thereby leading to excessive permeation. Barrier properties were believed to be relatively independent of fluorine concentration in the polymer. The development had as its objective the modification of fluorination processes for effecting reduction and elimination of the molecular pinholes from the surface of the container while at the same time effecting fluorination of the container at levels sufficient to provide the necessary and desired physical properties for fuel containers and bottles, e.g., abrasion and solvent permeation resistance.

An in-line, multi-step process for fluorinating fuel tanks and thin-walled bottle type polymer containers was considered the viable way to produce containers having an acceptable barrier to hydrocarbon solvents containing polar liquids as well as to meet future environmental emission requirements. The in-line, multi-step fluorination process would require carefully controlling the polymer temperature, concentration of fluorine in the reactant gas used during fluorination and the contact time of fluorination. The parison initially would be contacted with an initial reactant gas containing a low concentration of fluorine, the balance thereof being inert under the reaction conditions, at a temperature above the self-supporting temperature of the thermoplastic and for a time sufficient to effect surface fluorination. The self-supporting temperature here is defined as the temperature at which the parison or container will collapse if removed from the mold. If a reactant gas having a high concentration of fluorine were used to contact the polymer initially while it is at a temperature above the self-supporting temperature of the polymer, damage at the polymer surface may occur thereby reducing its barrier properties.

The pre-fluorinated parison then would be contacted with a reactant gas containing a relatively high concentration of fluorine in subsequent steps. The pre-fluorinated polymer may be at a temperature above the self-supporting temperature of the polymer, but then cooled to a temperature below the self-supporting temperature, but elevated. The exposure of a pre-fluorinated parison to an ambient temperature reactant gas containing a substantially higher concentration of fluorine than used initially would cause further fluorination of the polymer without causing damage to the polymer surface. Excessive localized heating would be reduced since many of the available reactive sites would have reacted with fluorine in the initial treatment and because the surface temperature of the pre-fluorinated parison would have been reduced on contact with the ambient temperature gas.

The in-line, multi-step fluorination process of the present invention therefore proposes to utilize an extremely dilute fluorine-containing gas, e.g., generally not greater than 1%, preferably not greater than 0.7% and most preferably not greater than 0.5% by volume as the fluorinating agent in the initial fluorination of thick walled containers, while the thermoplastic is at a temperature above the self-supporting temperature of the polymer. For example, a temperature generally varying from 105 to 130°C would be required for high density polyethylene (HDPE). For thick-walled containers, the fluorine concentration of the initial reactant gas preferably should be 0.25% to 0.7%; for thin-walled containers the fluorine concentration preferably should be from 0.7 to 1% by volume. If higher concentrations of fluorine in the reactant gas, e.g. >1%, were injected into the parison while the polymer is above the self-supporting temperature and for extended times, e.g., greater than 3 seconds, it appears that there is a searing or singeing effect caused by the aggressive reaction of fluorine with carbon causing surface damage, leading to increased solvent permeation. Reaction or contact pressures are conventional and suitably range from 2 to 50 bar (0.2 to 5 MPa).

Since the initial fluorine treatment is carried out above the self-supporting temperature of the polymer, it is very important, especially in the first embodiment, to carefully control the time involved in expanding and conforming the parison to the mold with an inert gas, if such initial step is used. The temperature of the polymer surface is largely dependent on the thickness of the wall, the temperature of the inflating gas and the contact time necessary for expanding and conforming the parison to the mold. For example, thin-walled containers cool rapidly on contact with room temperature inflation gas, thereby permitting the use of higher fluorine concentrations in the reactant gases. Thick-walled containers maintain temperature for a longer period of time and lower fluorine concentrations in the reactant gases are often required because of excessive surface temperatures. In any case, it is important to carefully control the expanding and conforming time in such a way that the initial fluorine treatment on contact with a reactant gas containing a low concentration of fluorine is carried out at a temperature above the self-supporting temperature of the polymer. Contact times in the first embodiment range for a reaction period of 2 to 30 seconds, preferably from 5 to 20 seconds. Although reaction times can extend for dilute streams beyond 30 seconds, no significant advantages appear to be achieved.

Once the surface of the container is fluorinated and the initial permeability substantially reduced, further fluorination of the surface to achieve the final reduction in permeability and achieve enhanced physical properties is effected. Secondary fluorination of the pre-fluorinated parison is achieved by contacting the surface with a fluorine-containing gas containing above 1%, eg from 1 to 20%, preferably from 1 to 10%, and more preferably from 2 to 6%, fluorine by volume of a period of 2 to 30 seconds, preferably a period of 5 to 20 seconds for both the thick and thin-walled containers when the container wall temperature is at an elevated temperature but below the self-supporting temperature. It is treatment of the pre-fluorinated parison with the higher concentration of fluorine in the subsequent reactant gas that causes a second fluorination of the parison to occur, thereby creating a second fluorine-polymer gradient. Because of the initial surface treatment of the polymer via contact with the dilute fluorine-containing gas, contact of the polymer surface with the reactive gas containing the higher concentration of fluorine does not singe or sear the surface and thereby causing surface damage.

Secondary treatment or fluorination of the pre-fluorinated parison can be achieved in more than one step by contacting reactive fluorine containing gases containing 1% and higher fluorine concentration with the surface of thick and thin-walled containers at an elevated temperature. For example, enhanced secondary fluorination can be achieved by utilizing a reactant gas containing 1% and higher fluorine for a period of 1 to 20 seconds, partially releasing the pressure and then undergoing a third or fourth treatment utilizing a reactive fluorine containing gas containing 1% and higher concentrations of fluorine for a period of 1 to 20 seconds. With each secondary fluorine treatment step, enhanced fluorination is achieved and essentially no surface disruption is observed by the reaction of reactant gas having a high concentration of fluorine gas with the thermoplastic polymer.

To summarize, in the multi-stage, in-line process, in contrast to the early methods of fluorination, initial contact of the parison is made with a dilute fluorine containing reactant gas for fluorinating the surface of the parison while the thermoplastic in its softened state and above while it is at a temperature above the self-supporting temperature for limited times. In the first embodiment the dilute fluorine-containing reactant gas will have a fluorine concentration not greater than 1% and preferably not greater than 0.7 to 0.5% by volume for thick-walled containers and preferably not less than 0.7 to 1% fluorine for thin-walled containers. Reaction periods of 2 to 30 seconds, preferably from 5 to 15 seconds, are employed. Initial surface fluorination at these concentrations effects an initial fluorinated polymer gradient. Secondary fluorination requires a reactant gas having a significantly higher fluorine concentration, typically from 2 to 5% for thick-walled containers and 5 to 10% for thin-walled containers. Contact times range from 2 to 30 seconds, preferably from 5 to 15 seconds for both initial and secondary treatment.

Preferably the thermoplastic material is polyethylene. Initial fluorination of the parison, and preferably at least the first treatment associated with the secondary fluorination, is to be conducted at above the self-supporting temperature of polyethylene. For polyethylene, the self-supporting temperature will vary from 105°C to 130°C and with final temperatures reaching below 100°C prior to ejection of the parison from the mold. If more than two fluorination steps are used in the multi-step process, subsequent steps may be carried out at temperatures below the self-supporting temperature of polyethylene.

The concentration of fluorine in the reactive gas for the fluorination steps is selected in such a way that it eliminates both under and over fluorination of the polymer. The polymer is considered to be under fluorinated if the fluorinated layer contains a fluorine concentration of less than 10 µg/cm², preferably less than 15 µg/cm²,as determined by a combination of x-ray fluorescence (XRF) and Rutherford back scattering (RBS) techniques. A lower concentration of fluorine in the barrier layer would result in poor solvent permeation resistance.

Although an effective fluorination treatment results in some "rumpling" of the polymer surface, an over fluorinated surface displays a more pronounced rumpling, the magnitude of which can be quantified by the increase in the surface area. It is believed that the higher solvent permeation rate observed is due to an increase in surface area available for transport, as well as possible surface stresses induced by the rumpling. The polymer is considered to be over fluorinated if the fluorinated layer has a ratio of actual surface area to geometric surface area greater than 2, preferably greater than 1.8. The actual and geometric surface areas are determined by using scanning tunnelling microscopy (STM). The geometric surface area corresponds to the surface area of a perfectly flat surface.

The consistency and reliability of the containers as to barrier resistance preferably are controlled by monitoring and controlling the amount of oxygen contaminant in the parison during the fluorination process in accordance with the second and third embodiments. The oxygen contaminant has been found to compete with fluorine during the fluorination process carried out at an elevated temperature. It is believed the oxygen contaminant changes the effective rate of reaction of fluorine with the polymer material and results in the incorporation of oxygen functionalities in the fluorinated polymer layer. The presence of oxygen contaminant in the parison results in erratic and inconsistent fluorination of the polymer. For example, low, uncontrolled levels of oxygen with high fluorine concentrations may result in over fluorination while high oxygen levels with low fluorine concentrations may lead to under fluorination; the parison can either be over fluorinated or under fluorinated depending on the amount of oxygen contaminant in the parison and the concentration of fluorine used during fluorination. The under or over fluorination of the parison as well as the incorporation of oxygen functionalities in the fluorinated layer decreases the solvent permeation resistance of the containers.

In the second and third embodiments, the in-line, multi-step fluorination process utilizes an extremely dilute fluorine containing gas, e.g., greater than 0.05%, but generally not greater than 0.5%, and preferably between 0.2 and 0.4% by volume as the fluorinating agent in the initial fluorination of thermoplastic containers while carefully minimizing and/or eliminating the oxygen contaminant in the container and while the thermoplastic is at a temperature above the self-supporting temperature of the polymer. For example, a temperature generally varying from 105°C to 130°C would be required for high density polyethylene (HDPE). If higher concentrations of fluorine in the reactant gas, e.g., greater than 0.5%, are injected into the parison while carefully minimizing and/or eliminating the oxygen contaminant in the parison and while the polymer is above the self-supporting temperature, the fluorine will react aggressively with the polymer and will cause over fluorination resulting in increased solvent permeation. The contact or reaction time for the initial fluorination step may range from 2 to 60 seconds, preferably from 5 to 45 seconds. Although contact times can extend for very dilute reactive gas streams beyond 60 seconds, no significant advantages are expected to be achieved. However, if a reaction time of less than 2 seconds is employed for the initial fluorination, the fluorine will not have enough time to react with the polymer and the polymer will be under fluorinated. Reaction or contact pressures for the initial fluorination step are conventional and suitably range from 2 to 50 bar (0.2 to 5 MPa).

Once the surface of the polymer has been fluorinated with a low concentration of fluorine in the initial step at a temperature above the self-supporting temperature of the polymer, further fluorination of the surface to achieve the final reduction in permeability and enhanced physical properties is effected. Secondary fluorination of the prefluorinated parison is carried out by contacting the surface with a fluorine-containing gas with the fluorine concentration ranging from 0.3 to 2%, preferably from 0.7 to 1.6% by volume but the concentration of fluorine typically is from 1½ to 4 times that used in the initial fluorination step. It is, once again, important to carefully minimize and/or eliminate the oxygen contaminant in the parison during fluorination to obtain fuel tanks with consistent and reliable solvent permeation resistance. If the secondary fluorination is carried out with higher than 2% fluorine in the reactive gas with low levels of oxygen contaminant in the parison while the polymer is at elevated temperatures, the fluorine can react aggressively with the polymer and cause over fluorination. The secondary fluorination of the prefluorinated parison is carried out for a period of 2 to 60 seconds, preferably a period of 5 to 45 seconds when the container wall temperature is at an elevated temperature but below the self-supporting temperature. Once again, if a reaction time of less than 2 seconds is employed for the secondary fluorination, the fluorine may not have enough time to react with the polymer and the polymer will be under fluorinated. It is treatment of the pre-fluorinated parison with a higher concentration of fluorine in the subsequent reactive gas in the presence of the minimum amount of oxygen contaminant that causes a second fluorination of the parison to occur, thereby creating a second fluorine-polymer gradient. With each secondary fluorine treatment step, enhanced fluorination is achieved and essentially no over fluorination is observed by the reaction of reactive gas having a slightly higher concentration of fluorine gas with the thermoplastic polymer.

Oxygen contaminant levels are maintained at low levels, e.g., below 50 ppm or, in the case of non-oxygen containing polymers, such that an oxygen-to-carbon ratio in the fluorinated polymer layer is below 0.08. The very dilute fluorine-containing reactive gas will have a fluorine concentration not greater than 0.5% and preferably between 0.2 and 0.4% by volume. Reaction periods of 2 to 60 seconds, preferably from 5 to 45 seconds, are employed. Initial surface fluorination at these concentrations effects an initial fluorinated polymer gradient. Secondary fluorination requires a reactant gas having a slightly higher fluorine concentration, typically from 0.3 to 2% and preferably from 0.7 to 1.6% while carefully minimizing and/or eliminating the oxygen contaminant in the parison. Contact times, once again, range from 2 to 60 seconds, preferably from 5 to 45 seconds for secondary treatment steps. If the duration of the fluorination step is too short or the oxygen contaminant present in the parison is too high, the polymer will be under fluorinated and will have a surface fluorine concentration of less than 10 µg/cm², preferably less than 15 µg/cm². Likewise, if the concentration of fluorine present during fluorination in the absence of the oxygen contaminant is too high, the polymer surface will be over fluorinated and will have a ratio of actual surface area to geometric surface area greater than 2, preferably greater than 1.8. In either case the fluorinated container will display poor solvent permeation resistance.

As noted above a key feature of the processes of the second and third embodiments involves carefully purging the parison and inert gas and reactive gas feed lines to reduce the oxygen contaminant level in the parison prior to fluorination. By keeping the oxygen concentration low, the desired oxygen/carbon (O/C) ratio in the fluorinated layer is maintained. However, because of the difficulty in analyzing oxygen levels during the fluorination process steps, it is easier to verify the effectiveness of the purging process for the removal of oxygen at each gas feed and exhaust line to the polymer container by analyzing the exhaust gas from a purged nonfluorinated parison or by analyzing the fluorinated surface of containers with respect to the oxygen/carbon ratio. If the ratio of oxygen to carbon in the fluorinated layer is 0.08 or above, then the process may require additional purging of the gas feed lines. (Monitoring of oxygen is done in the absence of fluorine because of the corrosivity of the fluorine to analytical equipment. It is the effectiveness of the purge with inert gas that is controlling and its effectiveness can be measured in the absence of fluorine.) With a reduction in oxygen contamination, the concentration of fluorine in the reactive gas for the first and subsequent fluorination treatment steps can be reduced vis-a-vis fluorination in an oxygen contaminated atmosphere. It can be controlled in such a way that it eliminates both under and over fluorination of the inside surface of the treated parison.

The following examples are provided to illustrate various embodiments of the invention and are not intended to restrict the scope thereof.

### Comparative Example 1

### Multi-Step Production of Thin-walled Containers from High Density Polyethylene

Cylindrical high density polyethylene (HDPE) thin-walled containers with a nominal wall thickness of 0.9 mm were prepared by the extrusion blow molding process. During the inflation process the containers were pressurized to approximately 100 psig (0.7 MPa) with either an inert nitrogen or a reactive treatment gas containing 1 or 10% fluorine in inert nitrogen for a period of 6 or 12 seconds, after which the pressure was released from the containers for a period of one and one-half seconds to allow the inert nitrogen or reactive gas to escape. The containers were then repressurized to a second time to approximately 100 psig (0.7 MPa) with inert nitrogen for a period of six seconds. After this the pressure was released from the containers for a period of one and one-half seconds to allow inert nitrogen to escape. They were pressurized a third time to approximately 100 psig with inert nitrogen for 6 seconds. Finally, the containers were vented to atmospheric pressure and removed from the mold. According to the above procedure, the containers were treated with fluorine containing gas only in the first step at above the self-supporting temperature of HDPE.

Containers prepared in the above manner were filled with a hydrocarbon solvent mixture consisting of eighty-five percent (85%) toluene and fifteen percent (15%) methanol by volume. The mouths of the filled containers were then heat sealed with foil-backed low density polyethylene film and capped. The sealed containers were stored in an ambient pressure air circulating oven at 50°C for 28 days, and their weight loss was monitored periodically.

Table 1 indicates the composition of the reactive treatment gas, treatment times and the resultant solvent permeability.

**Table 1**

| Treatment Concentration of Fluorine in Nitrogen | | | | | | | |
|---|---|---|---|---|---|---|---|
| Run No. | Gas 1 | Time | Gas 2 | Time | Gas 3 | Time | Solvent Permeated g/day |
| 1 | 0% | 6 Secs | 0% | 6 Secs | 0% | 6 Secs | 6.16 |
| 2 | 1% | 12 | 0% | 6 | 0% | 6 | 0.37 |
| 3 | 10% | 6 | 0% | 6 | 0% | 6 | 0.89 |

Run 1 shows, as was known, that HDPE is not resistant to hydrocarbon permeation absent fluorination. Run 2 shows a one-step treatment of HDPE using a reactant gas having a fluorine concentration (1% fluorine in nitrogen) at above the self-supporting temperature of HDPE significantly reduces the solvent permeation, but the solvent permeation value is rather high. Run 3 shows that a one-step treatment of HDPE with high fluorine containing gas (10% fluorine in nitrogen) at above the self-supporting temperature of HDPE is not as desirable as the use of a more dilute reactant gas because it provides HDPE containers with considerably lower resistance to solvent permeation. Although Run 2 provided good results, barrier properties may not meet future requirements.

### Comparative Example 2

### Multi-Step Production of Thin-Walled Containers from High Density Polyethylene

Cylindrical high density polyethylene (HDPE) thin-walled containers similar to ones described in Example 1 were prepared by the extrusion blow molding process. During the inflation process the containers were pressurized to approximately 100 psig (0.7 MPa) with an inert nitrogen reactant gas for a period of 6 or 12 seconds (Step 1 or Gas 1), after which the pressure was released from the containers for a period of one and one-half seconds to allow the nitrogen gas to escape. The containers then were repressurized a second time to approximately 100 psig (0.7 MPa) with a reactive treatment gas containing 1 or 10% fluorine in inert nitrogen for a period of 6 seconds (Step 2 or Gas 2). After this the pressure was released from the containers for a period of one and one-half seconds to allow reactive gas to escape. The containers were pressurized a third time to approximately 100 psig (0.7 MPa) with a reactive treatment gas containing 1 or 10% fluorine in inert nitrogen for a period of 6 seconds. Finally, the containers were vented to atmospheric pressure, purged with an ambient pressure air stream or an inert gas to remove any traces of reactive treatment gas and removed from the mold. Since the containers were thin-walled, they were quickly cooled from a temperature above the self-supporting temperature to a temperature below the self-supporting temperature of HDPE within a time estimated to be 2 to 3 seconds by the pressurizing and purging with inert nitrogen gas used in the Step 1 and prior to the reactant gas treatment in Step 2. The containers were, therefore, treated with a fluorine containing gas in multiple steps first at above and then below the self-supporting temperature of HDPE. The solvent permeability of these containers was determined following the procedure similar to the one described in Example 1. Table 2 indicates the composition of the reactive treatment gas, treatment times in seconds and the resultant solvent permeability.

**Table 2**

| Treatment Concentration of Fluorine in Nitrogen | | | | | | | |
|---|---|---|---|---|---|---|---|
| Run No. | Gas 1 | Time | Gas 2 | Time | Gas 3 | Time | Solvent Permeated g/day |
| 1 | 0% | 6 Secs | 1% | 6 Secs | 1% | 6 Secs | 3.29 |
| 2 | 0% | 12 | 10% | 6 | 10% | 6 | 0.36 |

Run 1 shows that a multi-step treatment of HDPE with low fluorine containing gas (1% fluorine in nitrogen) at below the self-supporting temperature of HDPE marginally improves the resistance to solvent permeation of treated containers. Run 2, on the other hand shows, that a multi-step treatment of HDPE with high fluorine containing gas (10% fluorine in nitrogen) at below the self-supporting temperature of HDPE significantly improves the resistance to solvent permeation of treated containers. The solvent permeation value was very similar to that noted with one-step treatment with low concentration of fluorine at above the self-supporting temperature of HDPE (compare results of Run 2 of Ex 2 with Run 2 of Ex 1). However, the solvent permeation value is still high.

### Example 3

### Multi-Step Production of Thin-walled Containers from High Density Polyethylene

Cylindrical high density polyethylene (HDPE) thin-walled containers similar to ones described in Example 1 were prepared by the extrusion blow molding process. During the inflation process the containers were pressurized to approximately 100 psig (0.7 MPa) with a reactive treatment gas containing 1 or 10% fluorine in inert nitrogen gas for a period of 6 or 12 seconds, after which the pressure was released from the containers for a period of one and one-half seconds to allow the reactive gas to escape. The containers were then repressurized a second time to approximately 100 psig (0.7 MPa) either with an inert nitrogen or a reactive treatment gas containing 10% fluorine in inert nitrogen for a period of 6 seconds. After pressurizing, pressure was released from the containers for a period of one and one-half seconds to allow reactive gas to escape. The containers were pressurized a third time to approximately 100 psig (0.7 MPa) with a reactive treatment gas containing 1 or 10% fluorine in inert nitrogen for a period of 6 seconds. Finally, the containers were vented to atmospheric pressure, purged with an ambient pressure air stream or an inert gas to remove any traces of reactive treatment gas and removed for the mold. Containers were, therefore, treated in the first step with fluorine containing gas at above the self-supporting temperature of HDPE. They were treated further in the second and third steps with fluorine containing gas at below the self-supporting temperature of HDPE.

The solvent permeability of these containers was determined following the procedure similar to the one described in Example 1. Table 3 indicates the composition of the reactive treatment gas, treatment times and the resultant solvent permeability.

**Table 3**

| Treatment Concentration of Fluorine in Nitrogen | | | | | | | |
|---|---|---|---|---|---|---|---|
| Run No. | Gas 1 | Time | Gas 2 | Time | Gas 3 | Time | Solvent Permeated g/day |
| 1 | 1% | 6 Secs | 0% | 6 Secs | 1% | 6 Secs | 0.55 |
| 2 | 1% | 12 | 10% | 6 | 10% | 6 | 0.22 |

Run 1 shows that a multi-step treatment of HDPE with low fluorine containing gas (1% fluorine in nitrogen) first at above the self-supporting temperature of HDPE and then at a temperature below the self-supporting temperature of HDPE improves the resistance to solvent permeation of the container. Run 2, on the other hand, shows that a multi-step treatment of contacting HDPE with an initial low fluorine containing gas (1% fluorine in nitrogen) at above the self-supporting temperature of HDPE and then contacting with a fluorine containing gas having a higher fluorine concentration than used initially (10% fluorine in nitrogen) at below the self-supporting temperature of HDPE greatly improves the resistance to solvent permeation of the container.

The result of Run 2 suggests that it is desirable to treat HDPE containers at above the self-supporting temperature with low fluorine containing gas first and, then, at some point, contacting HDPE at a temperature below the self-supporting temperature with high fluorine containing gas to significantly reduce solvent permeation of treated containers.

### Example 4

### Multi-Step Production of Thick-walled Automobile Fuel Tanks from High Density Polyethylene

The procedure of Example 2 was repeated utilizing a multi-step process for the production of thick-walled automobile fuel tanks with a nominal wall thickness of 4.0 mm wherein in the first step an inert nitrogen gas (Gas 1) was used to pressurize and inflate the parison for a period of 9 seconds, after which the pressure was released from the tanks. Because of relatively thick walls of the fuel tanks, the temperature remained above the self-supporting temperature of HDPE. The fuel tanks were treated in the second step with a reactive gas containing 1% fluorine by volume and the balance being nitrogen followed by tertiary treatment with reactive gases containing from 1% to 10% fluorine by volume. The secondary treatment times in the second (Gas 2) and third steps (Gas 3) were for a period of 9 seconds each. The fuel tanks were vented to atmospheric pressure, purged with an ambient pressure air stream or an inert gas to remove any traces of reactive treatment gas and removed from the mold. The tanks were, therefore, treated first with a fluorine containing gas at above the self-supporting temperature of HDPE. They were treated further with a fluorine containing gas at a temperature above or below the self-supporting temperature of HDPE or both above and below.

The hydrocarbon solvent permeability of these fuel tanks was determined following the procedure similar to the one described in Example 1. The hydrocarbon solvent mixture consisting of 92.5% indolene, 5.0% methanol, and 2.5% ethanol by volume was used for determining solvent permeability instead of using a hydrocarbon mixture of eighty-five percent (85%) toluene and fifteen percent (15%) methanol by volume. Table 4 indicates the composition of the reactive treatment gas, treatment times and the resultant solvent permeability after 8 weeks of storing in an ambient pressure air circulating oven at 40°C.

**Table 4**

| Treatment Concentration of Fluorine in Nitrogen | | | | | | | |
|---|---|---|---|---|---|---|---|
| Run No. | Gas 1 | Time | Gas 2 | Time | Gas 3 | Time | Solvent Permeated g/day |
| 1 | 0% | 9 Secs | 1% | 9 Secs | 1% | 9 Secs | 0.36 |
| 2 | 0% | 9 | 1% | 9 | 10% | 9 | 0.29 |
| 3 | 0% | 9 | 1% | 9 | 10% | 9 | 0.26 |

The data in Table 4, as with Table 3, again shows that a multi-step treatment of HDPE with low fluorine containing gas (1% fluorine in nitrogen) at above the self-supporting temperature of HDPE first and then with high fluorine containing gas (10% fluorine in nitrogen) initially at above and then ending below the self-supporting temperature of HDPE provides good solvent permeation value for the treated fuel tanks. However, the solvent permeation value is still higher than the desired value. For thick-walled containers such as fuel tanks, it is believed that a 1% and higher initial fluorine concentration may be too high of a concentration, or the contact time may have been too long for the process temperature.

### Example 5

### Multi-Step Production of Automobile Fuel Tanks from High Density Polyethylene

The procedure of Example 4 was repeated for the production of thick-walled automobile fuel tanks wherein in the second step a reactive gas containing 0.5% fluorine by volume and the balance being nitrogen at above the self-supporting temperature of HDPE was used followed by tertiary treatment at above or below the self-supporting temperature of HDPE with reactive gas containing from 0 to 10% fluorine by volume. The treatment times in the second and third steps were for a period of nine seconds each. The fuel tanks were vented to atmospheric pressure, purged with an ambient pressure air stream or an inert gas to remove any traces of reactive treatment gas and removed from the mold. The fuel tanks were, therefore, treated first with a reactant gas containing a low level of fluorine at above the self-supporting temperature of HDPE. They were treated further with high fluorine containing gas at above or below the self-supporting temperature of HDPE.

The solvent permeability of these containers was determined following the procedure similar to the one described in Example 4. Table 5 indicates the composition of the reactive treatment gas, treatment times an the resultant solvent permeability.

**Table 5**

| Treatment Concentration of Fluorine in Nitrogen | | | | | | | |
|---|---|---|---|---|---|---|---|
| Run No. | Gas 1 | Time | Gas 2 | Time | Gas 3 | Time | Solvent Permeated g/day |
| 1 | 0% | 9 Secs | 0.5% | 9 Secs | 0% | 9 Secs | 0.35 |
| 2 | 0% | 9 | 0.5% | 9 | 0% | 9 | 0.30 |
| 3 | 0% | 9 | 0.5% | 9 | 1% | 9 | 0.18 |
| 4 | 0% | 9 | 0.5% | 9 | 1% | 9 | 0.18 |
| 5 | 0% | 9 | 0.5% | 9 | 2.5% | 9 | 0.08 |
| 6 | 0% | 9 | 0.5% | 9 | 5% | 9 | 0.10 |
| 7 | 0% | 9 | 0.5% | 9 | 5% | 9 | 0.09 |
| 8 | 0% | 9 | 0.5% | 9 | 10% | 9 | 0.21 |
| 9 | 0% | 9 | 0.5% | 9 | 10% | 9 | 0.21 |

Runs 1-2 show enhanced resistance to permeability after an initial one-step treatment with low concentration of fluorine containing inert gas above the self-supporting temperature of the polymer. Runs 3 and 4 show after initial fluorination, contacting the containers with a gas having a higher fluorine content than otherwise would be acceptable for reducing permeability and improving barrier properties. Runs 8 & 9 show that additional reaction occurs over and beyond that shown in Runs 3-7. Higher permeability of the container, as noted in Runs 8 & 9 vis-a-vis Runs 6 & 7 is attributed to an increase in the polymeric degradation from aggressive, high fluorine concentration treatment, thereby damaging the surface. The institution of a secondary treatment reactant gas having too high a fluorine concentration may lead to reduced permeation relative to that obtained from using a reactant gas having a significantly higher concentration of fluorine (10 fold) from that used initially but less than the 20 fold increase used in Runs 8 & 9. In any case, the use of a reactant gas having a low concentration of fluorine prior to the introduction of reactant gas having the higher concentration permits one to obtain added benefits as illustrated in runs 4-6 of Table 4.

The data in Table 5 clearly show that a multi-step treatment of HDPE with low fluorine containing gas (0.5% fluorine in nitrogen) at above the self-supporting temperature of HDPE first and then with high fluorine containing gas (above 1% fluorine in nitrogen) at above or below the self-supporting temperature of HDPE provides excellent solvent permeation resistance to the treated fuel tanks. The solvent permeation value in some cases was noted to be well below the desired value.

The following examples are provided to illustrate the effect of oxygen.

### EXAMPLE 6

Automobile fuel tanks with a nominal wall thickness of 4.0 mm were prepared from a high density polyethylene (HDPE) by the extrusion blow molding process. During the inflation process the fuel tanks were pressurized to approximately 100 psig (0.7 MPa) with an inert nitrogen gas for a period of 9 seconds (Step 1 or Gas 1), after which the pressure was released from the fuel tanks to allow the nitrogen gas to escape. Because of relatively thick walls of the fuel tanks, the temperature of the polymer remained above the self-supporting temperature of HDPE. The fuel tanks then were repressurized a second time to approximately 100 psig (0.7 MPa) with a reactive treatment gas containing 0.5% fluorine in inert nitrogen for a period of 9 seconds (Step 2 or Gas 2). After this the pressure was released from the fuel tanks to allow reactive gas to escape. The fuel tanks were pressurized a third time to approximately 100 psig (0.7 MPa) with a reactive treatment gas containing 2.5% fluorine in inert nitrogen for a period of 9 seconds. Finally, the fuel tanks were vented to atmospheric pressure, purged with an ambient pressure air stream or an inert gas to remove any traces of reactive treatment gas and removed from the mold. The tanks were, therefore, treated first with a fluorine containing gas at above the self-supporting temperature of HDPE. They were treated further with a fluorine containing gas at a temperature above or below the self-supporting temperature of HDPE or both above and below.

A fuel tank prepared in the above manner was filled with a hydrocarbon solvent mixture consisting of 92.5% indolene (a mixture of hydrocarbons which simulates an unleaded automotive fuel), 5.0% methanol, and 2.5% ethanol by volume to determine hydrocarbon solvent permeability. The mouth of the filled fuel tank was then heat sealed with foil-backed low density polyethylene film and capped. The sealed fuel tank was stored in an ambient pressure air circulating oven at 40°C for 6 weeks, and its hydrocarbon permeation (weight loss) was monitored periodically. This fuel tank showed a hydrocarbon solvent permeability value of about 0.08 grams per day which was well below the value proposed by CARB. Although the values obtained are good, the results obtained were perhaps fortuitous as Examples 7 and 8 show. Better and more consistent results can be obtained with better oxygen control through monitoring and purging of the lines and parison as is set forth in later examples.

### EXAMPLE 7

The procedure for fluorinating high density polyethylene (HDPE) fuel tanks described in Example 6 was repeated using the identical conditions. The hydrocarbon solvent permeability one of these fuel tanks was determined following the same procedure as described in Example 6. This tank showed a hydrocarbon solvent permeability value close to 0.43 grams per day which was considerably higher than noted in Example 6 and specified by CARB.

### EXAMPLE 8

The procedure for fluorinating high density polyethylene (HDPE) fuel tanks described in Example 6 was repeated again using the identical conditions. The hydrocarbon solvent permeability of one of these fuel tanks was determined following the same procedure as described in Example 6. This tank showed a hydrocarbon solvent permeability value close to 0.47 grams per day which was considerably higher than noted in Example 6 and specified by CARB.

One of the fluorinated fuel tanks was analyzed to determine the thickness and composition of the fluorinated layer. The cross-sectional analysis using scanning electron microscopy (SEM) revealed a barrier thickness of about 0.2 µm. The surface composition determined by electron spectroscopy for chemical analysis (ESCA) revealed an O/C ratio of about 0.08 in the top about 100 Å (10 nm) of the barrier layer, indicating a significant incorporation of oxygen in the barrier layer.

### EXAMPLE 9

### HIGH FLUORINE LEVELS

The two step fluorination process described in Example 6 was repeated using a similar procedure with the exception of employing 0.8% and 5.0% fluorine in the first and second fluorination steps, respectively. However, precautions were taken including purging the parison and gas feed lines with inert nitrogen gas to minimize and/or eliminate oxygen contaminant prior to and during fluorination of fuel tanks. The level of oxygen contaminant in feed and exhaust lines to the polymer container was measured to be below 50 ppm. The fluorinated barrier thickness determined by analyzing one of the tanks was about 0.3 µm. The O/C ratio in the barrier layer was about 0.01, indicating considerable reduction in the incorporation of oxygen in the barrier layer by controlling the level of oxygen contaminant in the feed and exhaust lines to the polymer container.

The hydrocarbon solvent permeability of two of these fuel tanks was determined following a procedure similar to the one described in Example 6. These tanks showed a hydrocarbon solvent permeability value above 0.5 grams per day which was higher than noted in Examples 6 to 8 and specified by CARB.

The poor solvent permeation resistance value was believed to be related to over fluorination of the fuel tanks which was caused by the use of high concentration of fluorine during the first and second steps in the absence of significant oxygen contamination. Over fluorination of the fuel tanks produced an extremely rough fluorinated surface layer, as shown by a scanning electron micrograph (SEM). Furthermore, the over fluorination of the fuel tanks was evidenced by the high ratio of the actual surface area of the fluorinated layer to the geometric surface area-it was greater than 2.0.

### EXAMPLE 10

### LOW AND HIGH FLUORINE LEVELS

The two step fluorination process described in Example 6 was repeated using a similar procedure with the exception of employing 0.25% and 2.5% fluorine in the first and second fluorination steps, respectively. Further precautions were taken vis-a-vis Example 9 including purging the parison and gas feed lines with inert nitrogen gas to minimize and/or eliminate oxygen contaminant prior to and during fluorination of fuel tanks. The concentration of fluorine used in the first and second steps of this example was considerably lower than used in Example 9. The level of oxygen contaminant in the feed and exhaust lines to the polymer container was measured to be below 50 ppm. The thickness of the fluorinated barrier layer was about 0.3 µm. The O/C ratio in the barrier layer was about 0.01.

The hydrocarbon solvent permeability of six of these fuel tanks was determined following the procedure similar to the one described in Example 6. These tanks also showed a hydrocarbon solvent permeability value above 0.5 grams per day which was higher than noted in Examples 6 to 9 and specified by CARB.

It is believed the poor solvent permeation resistance value was once again related to over fluorination of the fuel tanks caused by the use of high concentration of fluorine during the second step in the absence of significant oxygen contamination. Over fluorination of the fuel tanks produced an extremely rough fluorinated surface layer, as shown by a scanning electron micrograph. Furthermore, the over fluorination of the fuel tanks was evidenced by the high ratio of the actual surface area of the fluorinated layer to the geometric surface area; it was greater than 2.0.

### COMPARATIVE EXAMPLE 11

### LOW FLUORINE LEVEL, SINGLE-STEP PROCESS

Automobile fuel tanks with a nominal wall thickness of 4.0 mm were prepared from a high density polyethylene (HDPE) by the extrusion blow molding process. During the inflation process the fuel tanks were pressurized to approximately 100 psig (0.7 MPa) with an inert nitrogen gas for approximately 5 seconds, after which the pressure was released from the fuel tanks to allow the nitrogen to escape. Because of the relatively thick walls of the fuel tanks, the temperature of the polymer remained above the self-supporting temperature of HDPE. The fuel tanks then were repressurized a second time to approximately 100 psig (0.7 MPa) with a reactive treatment gas containing 0.25% fluorine in inert nitrogen for a period of 16 seconds. After this the pressure was released from the fuel tanks to allow the reactive gas to escape. Finally, the fuel tanks were vented to atmospheric pressure, purged with an ambient pressure air stream or an inert gas to remove any traces of reactive treatment gas and removed from the mold. Proper precautions were taken including purging the parison and gas feed lines with inert nitrogen gas to minimize and/or eliminate oxygen contaminant prior to and during fluorination of the fuel tanks. The fluorination of these tanks was initiated at above the self-supporting temperature of HDPE. In summary, these tanks were prepared using a single step treatment with low concentration fluorine gas. The thickness of the barrier layer was less than 0.1 µm. The O/C ratio in the barrier layer was about 0.03.

The hydrocarbon solvent permeability of two of these fuel tanks was determined following a procedure similar to the one described in Example 6. The tanks showed a hydrocarbon solvent permeability above 0.5 g/day, which was considerably higher than specified by CARB.

The poor solvent permeation resistance value was related to under fluorination of the polymer surface. This under fluorination was evidenced by a fluorine content in the barrier layer of approximately 8 µg/cm² as determined by a combination of x-ray fluorescence (XRF) and Rutherford back scattering (RBS) techniques. This example also shows that it is not possible to produce containers with enhanced solvent permeation resistance by simply using a one-step process. It also shows that a fluorine content in the barrier layer substantially greater than 8 µg/cm² is required to produce fuel tanks with good solvent permeation resistance.

### EXAMPLE 12

### LOW-LOW FLUORINE LEVELS

Automobile fuel tanks with a nominal wall thickness of 4.0 mm were prepared from a high density polyethylene (HDPE) by the extrusion blow molding process. During the inflation process the fuel tanks were pressurized to approximately 100 psig (0.7 MPa) with an inert nitrogen gas for a period of 5 seconds (Step 1 or Gas 1), after which the pressure was released from the fuel tanks to allow the nitrogen gas to escape. Because of relatively thick walls of the fuel tanks, the temperature of the polymer remained above the self-supporting temperature of HDPE. The fuel tanks then were repressurized a second time to approximately 100 psig (0.7 MPa) with a reactive treatment gas containing 0.25% fluorine in inert nitrogen for a period of 15 seconds (Step 2 or Gas 2). After this the pressure was released from the fuel tanks to allow reactive gas to escape. The fuel tanks were pressurized a third time to approximately 100 psig (0.7 MPa) with a reactive treatment gas containing 0.7% fluorine in inert nitrogen for a period of 10 seconds (Step 3 or Gas 3). After this the pressure was released from the fuel tanks to allow reactive gas to escape. The fuel tanks were pressurized a fourth time to approximately 100 psig (0.7 MPa) with a reactive treatment gas containing 1.25% fluorine in inert nitrogen for a period of 10 seconds (Step 4 or Gas 4). Finally, the fuel tanks were vented to atmospheric pressure, purged with an ambient pressure air stream or an inert gas to remove any traces of reactive treatment gas and removed from the mold. Precautions were taken including purging the parison and gas feed lines with inert nitrogen gas to minimize and/or eliminate oxygen contaminant prior to and during fluorination of fuel tanks. The level of oxygen contaminant in the feed and exhaust lines to the polymer container was measured to be less than 50 ppm. Furthermore, the concentration of fluorine for the first and subsequent fluorination steps was selected carefully to eliminate both under and over fluorination of the fuel tanks. The tanks were, therefore, treated first with a fluorine containing gas at above the self-supporting temperature of HDPE. They were treated further with a fluorine containing gas at a temperature above or below the self-supporting temperature of HDPE or both above and below. The thickness of barrier layer was about 0.3 µm. The O/C ratio in the barrier layer was about 0.01.

The hydrocarbon solvent permeability of two of these fuel tanks was determined following the procedure similar to the one described in Example 6. These tanks showed a hydrocarbon solvent permeability value close to 0.03 grams per day which was considerably lower than noted in Example 6 and specified by CARB. The ratio of the actual surface area of the fluorinated layer to the geometric surface area was approximately 1.5, indicating that the interior surface of the fuel tanks was not over fluorinated. Additionally, the fluorinated layer produced in this example had a considerably lower surface roughness than Examples 9 and 10, as shown by a scanning electron micrograph. The concentration of fluorine in the fluorinated layer was approximately 60µg/cm², indicating that the interior surface of the fuel tanks was not under fluorinated. From these data, surface fluorination can range from 15 to 80µg/cm². However, it is believed that fluorination can be as high as possible, e.g., ≧100µg/cm² so long as the ratio of actual surface area to geometric surface area is maintained.

### EXAMPLE 13

### LOW-LOW FLUORINE LEVELS

The procedure for fluorinating high density polyethylene (HDPE) fuel tanks described in Example 12 was repeated using the identical conditions. The hydrocarbon solvent permeability of three of these fuel tanks was determined following the procedure similar to the one described in Example 6. These tanks showed a hydrocarbon solvent permeability value close to 0.05 grams per day which was, once again, considerably lower than noted in Example 6 and specified by CARB, but consistent with Example 12. The ratio of the actual surface area of the fluorinated layer to the geometric surface area was approximately 1.4, indicating that the interior surface of the fuel tanks was not over fluorinated. The concentration of fluorine in the fluorinated layer was approximately 50 µg/cm², indicating that the interior surface of the fuel tanks was not under fluorinated. The O/C ratio in the barrier layer was about 0.02.

### EXAMPLE 14

### LOW-LOW FLUORINE LEVELS

The procedure for fluorinating high density polyethylene (HDPE) fuel tanks described in Example 12 was repeated using the identical conditions. The hydrocarbon solvent permeability of six of these fuel tanks was determined following the procedure similar to the one described in Example 6. These tanks showed a hydrocarbon solvent permeability values ranging from 0.06 to 0.09 grams per day which were, once again, lower than noted in Example 6 and specified by CARB and consistent with Examples 12 and 13. The ratio of the actual surface area of the fluorinated layer to the geometric surface area was approximately 1.4, indicating that the interior surface of the fuel tanks was not over fluorinated. Additionally, the fluorinated layers produced in this example revealed considerably lower surface roughness than Examples 9 and 10, as shown by scanning electron micrographs. The concentration of fluorine in the fluorinated layer was approximately 50 µg/cm², indicating that the interior surface of the fuel tanks was not under fluorinated. The O/C ratio in the barrier layer was about 0.02.

### EXAMPLE 15

### LOW-LOW FLUORINE LEVELS

The procedure for fluorinating high density polyethylene (HDPE) fuel tanks described in Example 12 was repeated using the identical conditions. The hydrocarbon solvent permeability of seven of these fuel tanks was determined following the procedure similar to the one described in Example 6 with the exception of using pure indolene solvent. These tanks showed a hydrocarbon solvent permeability value ranging from 0.01 to 0.03 grams per day, indicating an excellent permeation barrier to nonpolar hydrocarbon solvents. The thickness of barrier layer was about 0.3µm. The O/C ratio in the barrier layer was about 0.01.

The above Examples clearly show that it is difficult to produce fuel tanks with enhanced solvent permeation resistance consistently and reproducibly with unmonitored and uncontrolled oxygen contamination in the parison during the fluorination process. Also, Examples 9 and 10 reveal that the consistency and reliability problems can not be resolved simply by minimizing and/or eliminating oxygen contaminant from the parison. They also showed that these problems can not be resolved by manipulating the concentration of fluorine in the first step alone. The consistency and reliability problems are solved by controlling the rate of fluorination in the first step and in all subsequent steps, while carefully minimizing and/or eliminating oxygen contamination.

## Claims

1. A process for the production of blow molded, permeation resistant thermoplastic articles via in-line fluorination wherein a parison of thermoplastic material is formed, expanded within a closed mold by means of an inflation gas for conforming the parison to the shape of the mold and fluorinated to effect surface fluorination of the interior of said parison thereby reducing its permeability to hydrocarbon fuels, characterized in that the parison is pressurized while at a temperature above its self-supporting temperature with a reactive fluorine containing gas containing at most 1% fluorine by volume for a time sufficient to effect initial fluorination of the interior surface of the parison and thereby form a pre-fluorinated parison, and said pre-fluorinated parison is subsequently pressurized with a reactive fluorine containing gas having a higher fluorine concentration than that employed in the initial fluorination to effect secondary fluorination.

2. A process as claimed in Claim 1, wherein said initial fluorination is conducted with a reactive fluorine containing gas containing from 0.1 to 1% fluorine by volume and said secondary fluorination is conducted with a reactive fluorine containing gas having a fluorine concentration of at least twice that employed in the initial fluorination but not less than 1% by volume.

3. A process as claimed in Claim 2, wherein the blown parison is thick-walled having a nominal thickness of 3 mm or greater and the reactive gas used for said initial fluorination contains from 0.25 to 0.7% fluorine by volume.

4. A process as claimed in Claim 2, wherein the blown parison is thin-walled having a nominal thickness of 2 mm or less and the reactive gas used for said initial fluorination contains from 0.5 to 1% fluorine by volume.

5. A process as claimed in any one of Claims 2 to 4, wherein the contact time for said initial fluorination is from 2 to 30 seconds.

6. A process as claimed in any one of Claims 2 to 5, wherein the reactive gas used for said secondary fluorination contains from 1 to 10% fluorine by volume.

7. A process as claimed in any one of Claims 2 to 6 wherein the contact time for said secondary fluorination is from 2 to 30 seconds.

8. A process as claimed in Claim 1, wherein said inflation gas is inert and an oxygen concentration of less than 50 ppm by volume is established in the blown parison and maintained during fluorination.

9. A process as claimed in Claim 1, wherein said thermoplastic material is non-oxygen containing, said inflation gas is inert and an oxygen concentration is established in the blown parison and maintained during fluorination such that the permeation resistant article has an oxygen to carbon ratio of less than 0.08 in the fluorinated layer.

10. A process as claimed in Claim 9, wherein the oxygen concentration is such as to provide an oxygen-to-carbon ratio of less than 0.03 in the fluorinated layer.

11. A process as claimed in Claim 9 or Claim 10, wherein the oxygen concentration and fluorination conditions are such as to provide an interior surface fluorination of greater than 15µg fluorine per cm², an oxygen-to-carbon ratio in the fluorinated layer of less than 0.08, and a ratio of actual surface area to geometric surface area of less than 1.8.

12. A process as claimed in any one of Claims 8 to 11, wherein the reactive gas used for said initial fluorination contains from 0.05 to 0.5% fluorine by volume and the reactive gas used for said secondary fluorination contains not greater than 2% fluorine by volume.

13. A process as claimed in Claim 12, wherein the reactive gas used for said initial fluorination contains from 0.2 to 0.4% fluorine by volume.

14. A process as claimed in any one of Claims 8 to 13, wherein the contact time for said initial fluorination is from 2 to 60 seconds.

15. A process as claimed in any one of Claims 8 to 14, wherein the reactive gas used for said secondary fluorination contains from 0.3 to 2% fluorine by volume.

16. A process as claimed in Claim 15, wherein the reactant gas used for said secondary fluorination contains from 0.7 to 1.6 percent by volume.

17. A process as claimed in any one of Claims 8 to 16, wherein the contact time for said secondary fluorination is from 2 to 60 seconds.

18. A process as claimed in any one of the preceding claims, wherein the pressure during pressurization to form the initial fluorinated parison is from 0.2 to 5 MPa (2 to 50 bar).

19. A process as claimed in any one of the preceding claims, wherein said secondary fluorination is conducted in two or more steps.

20. A process as claimed in any one of the preceding claims, wherein the thermoplastic material is high density polyethylene.

21. A process as claimed in any one of the preceding claims, wherein said secondary fluorination is conducted at below said self-supporting temperature.

## Patentansprüche

1. Verfahren zur Herstellung von blasgeformten, permeationsbeständigen thermoplastischen Gegenständen über In-line-Fluorierung, bei dem man einen Rohling aus thermoplastischem Material bildet, mit Hilfe eines Aufblasgases in der Form expandiert, um den Rohling an die Formgebung der Form anzupassen, sowie die innere Oberfläche des Rohlings fluoriert, um dessen Permeabilität für Kohlenwasserstofftreibstoffe zu senken, dadurch gekennzeichnet, daß der Rohling bei einer Temperatur oberhalb derjenigen, bei der er formstabil ist (self-supporting temperature), mit einem reaktiven fluorhaltigen Gas, das maximal 1 Vol.-% Fluor enthält, für ausreichende Zeit unter Druck gesetzt wird, um eine erste Fluorierung der inneren Oberfläche des Rohlings zu bewirken und dadurch einen vorfluorierten Rohling zu erhalten, wobei dieser vorfluorierte Rohling anschließend mit einem reaktiven fluorhaltigen Gas mit einer höheren Fluorkonzentration als in der ersten Fluorierung verwendet unter Druck gesetzt wird, um eine zweite Fluorierung zu bewirken.

2. Verfahren gemäß Anspruch 1, bei dem die erste Fluorierung mit einem reaktiven fluorhaltigen Gas, das 0,1 bis 1 Vol.-% Fluor enthält, und die zweite Fluorierung mit einem reaktiven fluorhaltigen Gas durchgeführt wird, das eine mindestens doppelt so hohe Fluorkonzentration wie das in der ersten Fluorierung verwendete, jedoch nicht weniger als 1 Vol.-% Fluor enthält.

3. Verfahren gemäß Anspruch 2, bei dem der blasgeformte Rohling dicke Wände mit einer nominalen Dicke von 3 mm oder darüber aufweist und das erste für die Fluorierung verwendete Gas 0,25 bis 0,7 Vol.-% Fluor enthält.

4. Verfahren gemäß Anspruch 2, bei dem der blasgeformte Rohling dünne Wände mit einer nominalen Dicke von 2 mm oder darunter aufweist und das für die erste Fluorierung verwendete Gas 0,5 bis 1 Vol.-% Fluor enthält.

5. Verfahren gemäß einem der Ansprüche 2 bis 4, bei dem die Kontaktzeit für die erste Fluorierung 2 bis 30 Sekunden beträgt.

6. Verfahren gemäß einem der Ansprüche 2 bis 5, bei dem das für die zweite Fluorierung verwendte reaktive Gas 1 bis 10 Vol.-% Fluor enthält.

7. Verfahren gemäß einem der Ansprüche 2 bis 6, bei dem die Kontaktzeit für die zweite Fluorierung 2 bis 30 Sekunden beträgt.

8. Verfahren gemäß Anspruch 1, bei dem das Aufblasgas inert ist und bei dem man im blasgeformten Rohling eine Sauerstoffkonzentration von weniger als 50 ppm (Volumen) einstellt und während der Fluorierung aufrechterhält.

9. Verfahren gemäß Anspruch 1, bei dem das thermoplastische Material keinen Sauerstoff enthält, das Aufblasgas inert ist und die Sauerstoffkonzentration im blasgeformten Rohling so eingestellt und aufrechterhalten wird, daß der permeationsbeständige Gegenstand ein Verhältnis von Sauerstoff zu Kohlenstoff unterhalb von 0,08 in der fluorierten Schicht aufweist.

10. Verfahren gemäß Anspruch 9, bei dem die Sauerstoffkonzentration so gewählt ist, daß für ein Sauerstoff/Kohlenstoff-Verhältnis von weniger als 0,03 in der fluorierten Schicht gesorgt ist.

11. Verfahren gemäß Anspruch 9 oder 10, bei dem die Sauerstoffkonzentration und die Fluorierungsbedingungen so gewählt sind, daß für eine Fluorierung der Innenoberfläche von über 15 µg Fluor pro cm², ein Sauerstoff/Kohlenstoff-Verhältnis von weniger als 0,08 und ein Verhältnis der tatsächlichen Oberfläche zur geometrischen Oberfläche unterhalb von 1,8 gesorgt ist.

12. Verfahren gemäß einem der Ansprüche 8 bis 11, bei dem das für die erste Fluorierung verwendete Gas 0,05 bis 0,5 Vol.-% Fluor und das für die zweite Fluorierung verwendete Gas nicht mehr als 2 Vol.-% Fluor enthält.

13. Verfahren gemäß Anspruch 12, bei dem das für die erste Fluorierung verwendete reaktive Gas 0,2 bis 0,4 Vol.-% Fluor enthält.

14. Verfahren gemäß einem der Ansprüche 8 bis 13, bei dem die Kontaktzeit für die erste Fluorierung 2 bis 60 Sekunden beträgt.

15. Verfahren gemäß einem der Ansprüche 8 bis 14, bei dem das für die zweite Fluorierung verwendete reaktive Gas 0,3 bis 2 Vol.-% Fluor enthält.

16. Verfahren gemäß Anspruch 15, bei dem das für die zweite Fluorierung verwendete reaktive Gas 0,7 bis 1,6 Vol.-% enthält.

17. Verfahren gemäß einem der Ansprüche 8 bis 16, bei dem die Kontaktzeit für die zweite Fluorierung 2 bis 60 Sekunden beträgt.

18. Verfahren gemäß einem der vorstehenden Ansprüche, bei dem der Druck während des Aufpressens zum Formen des erstmals fluorierten Rohlings von 0,2 bis 5 MPa (2 bis 50 bar) beträgt.

19. Verfahren gemäß einem der vorstehenden Ansprüche, bei dem die zweite Fluorierung in einem oder mehreren Schritten durchgeführt wird.

20. Verfahren gemäß einem der vorstehenden Ansprüche, bei dem das thermoplastische Material Polyethylen hoher Dichte ist.

21. Verfahren gemäß einem der vorstehenden Ansprüche, bei dem die zweite Fluorierung unterhalb der Temperatur durchgeführt wird, bei der der Rohling formstabil ist.

## Revendications

1. Procédé de production d'articles en matière thermoplastique résistants à la perméation moulés par soufflage, par fluoration en ligne, dans lequel on forme une ébauche en matière thermoplastique, on lui fait subir une expansion dans un moule fermé à l'aide d'un gaz de gonflage pour adapter l'ébauche à la forme du moule et on la fluore pour effectuer une fluoration en surface de l'intérieur de ladite ébauche en réduisant ainsi sa perméabilité aux carburants hydrocarbonés, caractérisé en ce que l'on met l'ébauche en pression à une température supérieure à sa température d'affaissement avec un gaz fluoré réactif contenant au moins 1 % en volume de fluor, pendant un temps suffisant pour effectuer une fluoration initiale de la surface interne de l'ébauche et former ainsi une ébauche préfluorée, puis on met ladite ébauche préfluorée en pression avec un gaz fluoré réactif ayant une concentration en fluor plus élevée que celui utilisé dans la fluoration initiale, pour effectuer une fluoration secondaire.

2. Procédé selon la revendication 1, dans lequel on effectue la fluoration initiale avec un gaz fluoré réactif contenant de 0,1 à 1 % en volume de fluor, et on effectue ladite fluoration secondaire avec un gaz fluoré réactif ayant une concentration en fluor qui est d'au moins deux fois celle utilisée dans la fluoration initiale et d'au moins 1 % en volume.

3. Procédé selon la revendication 2, dans lequel l'ébauche soufflée a des parois épaisses, d'une épaisseur nominale d'au moins 3 mm, et le gaz réactif utilisé pour ladite fluoration initiale contient de 0,25 à 0,7 % en volume de fluor.

4. Procédé selon la revendication 2, dans lequel l'ébauche soufflée a des parois minces, d'une épaisseur nominale inférieure ou égale à 2 mm, et le gaz réactif utilisé pour ladite fluoration initiale contient de 0,5 à 1 % en volume de fluor.

5. Procédé selon l'une quelconque des revendications 2 à 4, dans lequel le temps de contact pour ladite fluoration initiale est de 2 à 30 secondes.

6. Procédé selon l'une quelconque des revendications 2 à 5, dans lequel le gaz réactif utilisé pour ladite fluoration secondaire contient de 1 à 10 % en volume de fluor.

7. Procédé selon l'une quelconque des revendications 2 à 6, dans lequel le temps de contact pour ladite fluoration secondaire est de 2 à 30 secondes.

8. Procédé selon la revendication 1, dans lequel ledit gaz de gonflage est inerte, et on établit et on maintient pendant la fluoration dans l'ébauche soufflée une concentration en oxygène inférieure à 50 ppm en volume.

9. Procédé selon la revendication 1, dans lequel ladite matière thermoplastique ne contient pas d'oxygène, ledit gaz de gonflage est inerte, et on établit et on maintient pendant la fluoration dans l'ébauche soufflée une concentration en oxygène telle que le rapport de l'oxygène au carbone dans la couche fluorée de l'article résistant à la perméation est inférieur à 0,08.

10. Procédé selon la revendication 9, dans lequel la concentration d'oxygène est telle que le rapport de l'oxygène au carbone dans la couche fluorée est inférieur à 0,03.

11. Procédé selon la revendication 9 ou la revendication 10, dans lequel la concentration en oxygène et les conditions de fluoration sont telles que l'on obtient une fluoration de la surface interne supérieure à 15 µg de fluor par cm², un rapport de l'oxygène au carbone dans la couche fluorée inférieur à 0,08 et un rapport de l'aire de surface réelle à l'aire de surface géométrique inférieur à 1,8.

12. Procédé selon l'une quelconque des revendications 8 à 11, dans lequel le gaz réactif utilisé pour ladite fluoration initiale contient de 0,05 à 0,5 % en volume de fluor et le gaz réactif utilisé pour ladite fluoration secondaire ne contient pas plus de 2 % en volume de fluor.

13. Procédé selon la revendication 12, dans lequel le gaz réactif utilisé pour ladite fluoration initiale contient de 0,2 à 0,4 % en volume de fluor.

14. Procédé selon l'une quelconque des revendications 8 à 13, dans lequel le temps de contact pour ladite fluoration initiale est de 2 à 60 secondes.

15. Procédé selon l'une quelconque des revendications 8 à 14, dans lequel le gaz réactif utilisé pour ladite fluoration secondaire contient de 0,3 à 2 % en volume de fluor.

16. Procédé selon la revendication 15, dans lequel le gaz réactif utilisé pour ladite fluoration secondaire contient de 0,7 à 1,6 % en volume.

17. Procédé selon l'une quelconque des revendications 8 à 16, dans lequel le temps de contact pour ladite fluoration secondaire est de 2 à 60 secondes.

18. Procédé selon l'une quelconque des revendications précédentes, dans lequel la pression pendant la mise en pression pour la formation de l'ébauche fluorée initiale est de 0,2 à 5 MPa (2 à 50 bars).

19. Procédé selon l'une quelconque des revendications précédentes, dans lequel ladite fluoration secondaire est effectuée en deux ou plusieurs étapes.

20. Procédé selon l'une quelconque des revendications précédentes, dans lequel la matière thermoplastique est un polyéthylène haute densité.

21. Procédé selon l'une quelconque des revendications précédentes, dans lequel on effectue ladite fluoration secondaire à une température inférieure à ladite température d'affaissement.
